# EUROPÄISCHE PATENTSCHRIFT

(11) **EP 3 179 161 B1**
(45) Veröffentlichungstag und Bekanntmachung des Hinweises auf die Patenterteilung: **06.02.2019**
(21) Anmeldenummer: 15199622.0
(22) Anmeldetag: 11.12.2015
(51) Int. Cl.: F21V 8/00

(54) **LEUCHTELEMENT**
LUMINOUS ELEMENT
ÉLÉMENT D'ÉCLAIRAGE

(43) Veröffentlichungstag der Anmeldung: 14.06.2017
(73) Patentinhaber: Glas Trösch Holding AG, 6374 Buochs (CH)
(72) Erfinder: Knuchel, Beat, 4937 Ursenbach (CH); Lanz, Daniel, 4924 Obersteckholz (CH); Graf, Roman, 4617 Gunzgen (CH)
(74) Vertreter: Keller & Partner Patentanwälte AG

(56) Entgegenhaltungen:
- EP-A2- 2 051 114
- EP-A2- 2 107 400
- EP-A2- 2 560 035
- WO-A1-2009/072697
- DE-A1-102006 041 992
- GB-A- 2 376 287
- US-A1- 2010 283 942
- US-A1- 2011 228 193
- US-A1- 2011 235 308
- US-A1- 2012 230 008
- US-A1- 2015 168 640

## Beschreibung

### Technisches Gebiet

Die Erfindung betrifft ein Leuchtelement mit einem Gehäuse, das einen Rahmen umfasst, mit einer lichtdurchlässigen Platte, welche frontseitig am Rahmen angeordnet ist, mindestens einem LED-Leuchtband, welches entlang mindestens einer Innenseite des Rahmens angeordnet ist, einer Lichtleiterplatte, welche hinter der lichtdurchlässigen Platte und parallel zu dieser im Gehäuse angeordnet ist, wobei über mindestens eine Seitenfläche der Lichtleiterplatte Licht des mindestens einen LED-Leuchtbands in die Lichtleiterplatte eingekoppelt wird und wobei Licht über eine Hauptfläche der Lichtleiterplatte in Richtung der lichtdurchlässigen Platte ausgekoppelt wird, und mindestens einem flächigen Diffusor, welcher zwischen der Lichtleiterplatte und der lichtdurchlässigen Platte angeordnet ist und eine Lichtverteilung im Bereich der lichtdurchlässigen Platte vergleichmässigt.

### Stand der Technik

Derartige Leuchtelemente sind bekannt. Sie dienen als Beleuchtungskörper, dekorative Einrichtungselemente, hinterleuchtete Hinweis- oder Werbeschilder usw. Aus ästhetischen und funktionalen Gründen ist es oft wünschenswert, wenn die Frontseite des Leuchtelements praktisch vollständig beleuchtet ist, das Leuchtelement also keinen oder nur einen dünnen Rahmen aufweist.

So zeigt beispielsweise die CN 204328712 U (Suzhou Enbrightech Co. Ltd.) ein rahmenloses flächiges Leuchtpanel. Dieses umfasst ein Profil, an welchem LED-Leuchtbänder, eine Lichtleiterplatte, in welche Licht der Leuchtbänder seitlich eingekoppelt wird und eine frontseitig angeordnete Diffusorplatte befestigt sind. Hinter der Lichtleiterplatte ist eine Reflexionsschicht vorhanden. Die Diffusorplatte erstreckt sich radial bis über den radialen Bereich der LED-Leuchtbänder und überdeckt das Profil vollständig. Von vorne ist somit kein Rahmen sichtbar.

Trotz der rahmenlosen Ausführung ergibt sich bei diesem Leuchtpanel allerdings nicht eine gleichmässige Ausleuchtung über die gesamte Frontfläche. Namentlich in demjenigen Bereich, in welchem die Diffusorplatte das Profil überdeckt, ist mit Abschattungen zu rechnen. Aufgrund der Tatsache, dass die vordere Fläche des Leuchtpanels von der Diffusorplatte gebildet ist, ergibt sich zudem ein eingeschränkter Verwendungsbereich.

Die US 2015/168640 (Joeng Young Hun) offenbart eine Anzeigevorrichtung, welche ein ein Anzeigepanel, eine Hintergrundbeleuchtungseinheit und einen optischen Rahmen umfasst. Der optische Rahmen stützt das Anzeigepanel und stellt das Licht, das von der Hintergrundbeleuchtungseinheit abgegeben wird, an der gesamten Fläche des Anzeigepanels bereit. Die Hintergrundbeleuchtungseinheit umfasst einen Lichtquellenteil, ein Lichtleiterpanel, eine optische Schicht und ein Gehäuse. Der optische Rahmen umfasst einen Panelstützteil und einen Lichtdiffusionsteil. Der Lichtdiffusionsteil ragt vom Panelstützteil nach innen und überdeckt einen Bereich der Oberseite des Lichtleiterpanels. Des Weiteren ist bei dem Lichtdiffusionsteil eine optische Struktur zum Streuen von Licht, wie beispielsweise eine Prismenstruktur, an einer dem Anzeigepanel zugewandten Oberfläche angeordnet.

### Darstellung der Erfindung

Aufgabe der Erfindung ist es, ein dem eingangs genannten technischen Gebiet zugehörendes Leuchtelement zu schaffen, welches höchstens einen schmalen Rahmen aufweist und dessen Lichtverteilung an der frontseitigen lichtdurchlässigen Platte möglichst gleichmässig ist.

Die Lösung der Aufgabe ist durch die Merkmale des Anspruchs 1 definiert. Gemäss der Erfindung beschränkt sich eine flächige Erstreckung des mindestens einen flächigen Diffusors auf einen Randbereich der lichtdurchlässigen Platte, und der mindestens eine flächige Diffusor weist einen ersten Abschnitt mit einer radial von aussen nach innen abnehmenden Dicke auf, wobei der erste Abschnitt des mindestens einen flächigen Diffusors in eine scharfe Kante ausläuft.

Es hat sich gezeigt, dass sich das Problem einer ungleichmässigen Lichtverteilung bei solchen Leuchtelementen primär im Randbereich der beleuchteten Fläche zeigt. Namentlich so genannte Hot-Spots in der Nähe der Positionen der LED-Lichtquellen sowie Abschattungen treten in diesem Bereich auf. Eine Möglichkeit, mit solchen Ungleichmässigkeiten umzugehen, ist die Abdeckung des Randbereichs durch einen radial nach innen ragenden Rand - von aussen ist dann nur noch die gleichmässig beleuchtete Fläche sichtbar. Dies führt aber zu einem relativ breiten, gut sichtbaren Rand. Eine Reduktion von Hot-Spots und Abschattungen ergibt sich auch bei einer dicken Bauweise des Leuchtelements, namentlich bei relativ grossem Abstand zwischen Lichtleiterplatte und lichtdurchlässiger Platte. Der erfindungsgemässe Diffusor ermöglicht nun die Realisierung von Leuchtelementen, die eine gleichmässige Beleuchtung der frontseitigen lichtdurchlässigen Platte und gleichzeitig eine flache Bauweise und einen dünnen Rand erlauben. Dies wird durch die im Bereich der lichtdurchlässigen Platte bis nach aussen vergleichmässigte Lichtverteilung ermöglicht.

Im Folgenden bezieht sich die Angabe "frontseitig" oder "vorne" jeweils auf die lichtabgebende Hauptfläche des Leuchtelements. Entsprechend verweist "rückseitig" oder "hinten" auf eine Richtung von dieser Hauptfläche weg. Die Angabe "radial" bezieht sich auf eine Hauptfläche und bezeichnet eine Richtung senkrecht zur äusseren Begrenzung der entsprechenden Fläche.

Die Lichtleiterplatte koppelt Licht in Richtung der lichtdurchlässigen Platte aus, also über die vordere Hauptfläche. Dazu weist sie an sich bekannte Elemente, z. B. Streuzentren oder totalreflektierende Grenzflächen, auf. Sie kann grundsätzlich Licht auch über andere Flächen, insbesondere über die gegenüberliegende hintere Hauptfläche auskoppeln. Licht, das nicht über die vordere Hauptfläche ausgekoppelt wurde, kann wieder in die Lichtleiterplatte zurückgeführt werden, z. B. durch Reflektoren.

Der flächige Diffusor erstreckt sich nun erfindungsgemäss nicht wie aus dem Stand der Technik bekannt über die gesamte Fläche der Lichtleiterplatte bzw. der lichtdurchlässigen Platte, sondern die flächige Erstreckung beschränkt sich auf einen Randbereich der lichtdurchlässigen Platte. Dies bedeutet, dass sich in der Diffusorebene radial innen an den Diffusor ein Bereich anschliesst, in welchem kein Diffusor vorhanden ist. Der Diffusor ist streifen- oder rahmenförmig ausgebildet, wobei seine Form der äusseren Begrenzung der Lichtleiterplatte bzw. der lichtdurchlässigen Platte angepasst ist. Die radiale Ausdehnung des flächigen Diffusors, gemessen von der äusseren Kante der Lichtleiterplatte beträgt insbesondere 0.75 - 3.0 cm. Es hat sich gezeigt, dass mit Diffusorstreifen dieser Dimensionen die problematischen Effekte im Randbereich vermieden werden können.

Der flächige Diffusor weist nun einen ersten Abschnitt mit einer radial von aussen nach innen abnehmenden Dicke auf. Es hat sich gezeigt, dass dadurch zum einen die primär in einem radial äusseren Bereich auftretenden Hotspot-Effekte ausgeglichen werden, dass aber zum anderen Schatten bei der radial inneren Endkante des Diffusors vermieden werden. Der Diffusor kann nebst dem ersten Abschnitt weitere innen und/oder aussen an den ersten Abschnitt anschliessende Bereiche mit unterschiedlichem Dickenverlauf aufweisen. Insbesondere erstreckt sich aber der erste Abschnitt bis zur radial inneren Endkante des Diffusors. Wie im Folgenden diskutiert kann die Abnahme auf unterschiedliche Art und Weise erfolgen, der erste Abschnitt kann auch mehrere Unterabschnitte aufweisen, in welchen die Dickenänderung unterschiedlich verläuft. Bevorzugt weisen aber weder der erste Abschnitt noch weitere Abschnitte Stufen auf, d. h. der Dickenverlauf ist mit Vorteil stetig, um Schatteneffekte zu vermeiden.

Erfindungsgemäss läuft der erste Abschnitt des mindestens einen flächigen Diffusors in eine scharfe Kante aus. Dies bedeutet, dass die Dicke des ersten Abschnitts am radial inneren Ende allmählich dünner wird, so dass die die Kante einschliessenden Seitenflächen einen kleinen Winkel, von beispielsweise unter 20°, insbesondere unter 10°, aufweisen. Es ergibt sich somit gleichsam ein glatter Übergang zum innenliegenden Bereich ohne Diffusor. Schatteneffekte werden so zuverlässig vermieden.

Mit Vorteil ist der erste Abschnitt des mindestens einen flächigen Diffusors auf mindestens einer Hauptfläche im Querschnitt konkav ausgebildet. Durch die konkave Form lässt sich bei moderater radialer Ausdehnung des Diffusors ein innerer Bereich des ersten Abschnitts erreichen, in welchem die gegenüberliegenden Hauptflächen in einem spitzen Winkel aufeinander zu laufen.

Alternativ ist kein konkaver Abschnitt vorhanden, und der erste Abschnitt weist beispielswese eine linear abnehmende Dicke auf.

Mit Vorteil weist der mindestens eine flächige Diffusor eine erste ebene Hauptfläche und gegenüberliegend eine zweite, gebogene Hauptfläche auf. Es hat sich gezeigt, dass diese Geometrie in Bezug auf die lichtverteilenden Eigenschaften des Diffusors vorteilhaft ist.

Bevorzugt ist zudem die ebene Hauptfläche der Lichtleiterplatte zugewandt. Die gebogene Hauptfläche ist also der lichtdurchlässigen Platte zugewandt. Diese Orientierung sorgt für eine gute Lichtverteilung und vermeidet Schattenbildungen im radial inneren Bereich des Diffusors.

Alternativ sind beide Hauptflächen aus ebenen Abschnitten gebildet, oder beide Hauptflächen weisen gebogene Abschnitte auf. Je nach Geometrie ist auch eine Anordnung möglich, bei welcher eine ebene Hauptfläche der Lichtleiterplatte abgewandt ist.

Bevorzugt weist der mindestens eine flächige Diffusor radial aussen an den ersten Abschnitt anschliessend einen zweiten Abschnitt mit konstantem Querschnitt auf. Dieser sorgt für die notwendige Lichtverteilung im Bereich der Hotspots der LED-Lichtquellen, während der innere erste Abschnitt mit abnehmender Dicke einen allmählichen Übergang zum diffusorlosen Bereich schafft, wodurch Ränder und Schatten vermieden werden.

Besonders bevorzugt weist der flächige Diffusor im Querschnitt von radial aussen nach innen folgende Abschnitte auf:
i) Abschnitt mit konstantem Querschnitt (zweiter Abschnitt);
ii) Abschnitt mit sich einseitig verringernder Dicke, konvex (äusserer Bereich des ersten Abschnitts);
iii) Abschnitt mit sich einseitig verringernder Dicke, konkav (innerer Bereich des ersten Abschnitts), auslaufend in eine scharfe Kante.

Die Verringerung der Dicke erfolgt bei dieser Ausführungsform nur auf einer Seite des Diffusors, die gegenüberliegende Hauptfläche ist eben.

Alternativ nimmt die Dicke des flächigen Diffusors bereits in einem äusseren Bereich ab oder sie nimmt radial von aussen nach innen zunächst zu und dann wieder ab.

Mit Vorteil erstreckt sich der zweite Abschnitt radial nach aussen bis in den Bereich des mindestens einen LED-Leuchtbands. Dies bedeutet, dass sich in einer Projektion senkrecht zu den Hauptflächen der lichtdurchlässigen Platte und der Lichtleiterplatte die vom zweiten Abschnitt bedeckten Bereiche mit den vom LED-Leuchtband bedeckten Bereichen überlappen. Diese Geometrie des zweiten Abschnitts stellt eine möglichst vollständige gleichmässige Verteilung des von den LED-Lichtquellen des Lichtbands abgestrahlten Lichts sicher.

Bevorzugt sind mindestens zwei LED-Leuchtbänder an einander gegenüberliegenden Seiten angeordnet, und das Licht der mindestens zwei LED-Leuchtbänder wird über mindestens zwei einander gegenüberliegende Seitenflächen der Lichtleiterplatte in diese eingekoppelt. Dadurch lässt sich eine gleichmässige Beleuchtung im Bereich der lichtdurchlässigen Platte erreichen, auch bei grösseren Flächen.

Mit Vorteil beschränkt sich die flächige Erstreckung des mindestens einen flächigen Diffusors auf diejenigen Randbereiche der lichtdurchlässigen Platte, über deren Seitenflächen Licht in die Lichtleiterplatte eingekoppelt wird. In diesen Randbereichen treten Probleme mit Hot Spots und Schattenbildung auf. Entsprechend werden diese Probleme dort auch mit Hilfe der flächigen Diffusoren gelöst. Wenn ein Leuchtelement zwei gegenüberliegende Leuchtbänder aufweist, umfasst es also mit Vorteil auch zwei streifenförmige Diffusoren, die in den entsprechenden Randbereichen angeordnet sind. Weist ein rechteckiges Leuchtelement beispielsweise vier entlang aller Seiten angeordnete LED-Leuchtbänder auf, so sind mit Vorteil auch alle vier Randbereiche mit einem Diffusor ausgestattet. Dieser kann als rechteckiger Rahmen ausgebildet sein oder wird durch vier Streifen gebildet.

Alternativ sind auch entlang von Kanten Diffusoren vorhanden, die nicht mit LED-Leuchtbändern ausgestattet sind. Die Geometrie dieser Diffusoren kann sich von derjenigen der anderen unterscheiden oder mit diesen übereinstimmen. Zusätzliche Diffusoren sind beispielsweise dann sinnvoll, wenn die nicht mit LED-Leuchtbändern ausgestatteten Kanten Reflektoren umfassen.

Bei einer bevorzugten Ausführungsform ist die lichtdurchlässige Platte vom Rahmen umschlossen. Es ergibt sich eine sichere Befestigungsmöglichkeit für die Platte, und das Licht kann gleichmässig über die gesamte Platte verteilt werden.

Alternativ ist die lichtdurchlässige Platte auf den Rahmen aufgesetzt, überragt diesen somit zumindest teilweise. Hier ist gegebenenfalls nicht die gesamte vordere Hauptfläche der Platte beleuchtet.

Vorzugsweise ist der Rahmen durch ein Profil mit Aufnahmenuten für das mindestens eine LED-Leuchtband, die Lichtleiterplatte, den mindestens einen flächigen Diffusor und die lichtdurchlässige Platte gebildet. Das Leuchtelement lässt sich auf diese Weise kompakt und robust aufbauen. Die benötigen Elemente sind in einer fest vorgegebenen Anordnung im Rahmen gehalten, wodurch sich eine konstante und reproduzierbare Beleuchtung der lichtdurchlässigen Platte erreichen lässt.

Alternativ sind einige oder alle Elemente auf andere Weise am Rahmen gehalten, beispielsweise an vorgegebenen Positionen mit einer ebenen Innenfläche des Rahmens verklebt.

Mit Vorteil erstreckt sich der Rahmen frontseitig nicht über die lichtdurchlässige Platte radial nach innen. Dies bedeutet, dass die Frontseite der lichtdurchlässigen Platte vollständig von aussen sichtbar ist und ein Rahmen nur ausserhalb oder allenfalls hinter der Platte zu liegen kommt. Diese Ausgestaltung hat ästhetische Vorteile und wird - bei einer geforderten gleichmässigen Beleuchtung der lichtdurchlässigen Platte - durch den erfindungsgemässen Aufbau erst ermöglicht.

Mit Vorteil beträgt ein radialer Abstand zwischen allen Aussenkanten der lichtdurchlässigen Platte und einem entsprechenden Aussenmantel des Rahmens maximal 5 mm. Auch diese Geometrie wird - bei geforderter gleichmässiger Beleuchtung der lichtdurchlässigen Platte - durch die erfindungsgemässe Verwendung des mindestens einen Diffusors ermöglicht. Aufgrund des schmalen Rahmens wird die beleuchtete Fläche maximiert und die Ästhetik der Leuchtplatte verbessert.

Bei einer bevorzugten Ausführungsform umfasst die lichtdurchlässige Platte eine Glasplatte. Glas bietet eine hochwertige Erscheinung sowie hohe Lichtdurchlässigkeit und ist sehr dauerhaft. Die Glasplatte kann mattiert sein und/oder zusätzliche Schichten, z. B. im Sieb- oder Digitaldruck hergestellte Dekorschichten, aufweisen. Die Glasplatte selbst kann ebenfalls aus mehreren Schichten aufgebaut sein.

Alternativ besteht die lichtdurchlässige Platte aus einem anderen Material, z. B. PMMA. Auch hier können eine Mattierung und/oder eine oder mehrere Dekorschichten vorhanden sein.

Mit Vorteil umfasst das Leuchtelement weiter eine reflektierende Platte, welche hinter der Lichtleiterplatte angeordnet ist. Sie reflektiert aus der Lichtleiterplatte nach hinten ausgekoppeltes Licht zurück in die Lichtleiterplatte und verbessert dadurch die Gesamteffizienz des Leuchtelements.

Alternativ ist die Lichtleiterplatte derart ausgebildet, dass nach hinten praktisch keine Auskoppelung von Licht stattfindet und/oder sie weist rückseitig bzw. in einem hinteren Bereich eine reflektierende Schicht bzw. Beschichtung auf.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1A: Eine Draufsicht auf eine Ausführungsform des erfindungsgemässen Leuchtelements;
- Fig. 1B: eine Seitenansicht des Leuchtelements;
- Fig. 1C: einen Querschnitt durch das Leuchtelement in der Ebene A-A; und
- Fig. 2: eine Detailansicht des Randbereichs im Querschnitt der Figur 1C.

Grundsätzlich sind in den Figuren gleiche Teile mit gleichen Bezugszeichen versehen.

### Wege zur Ausführung der Erfindung

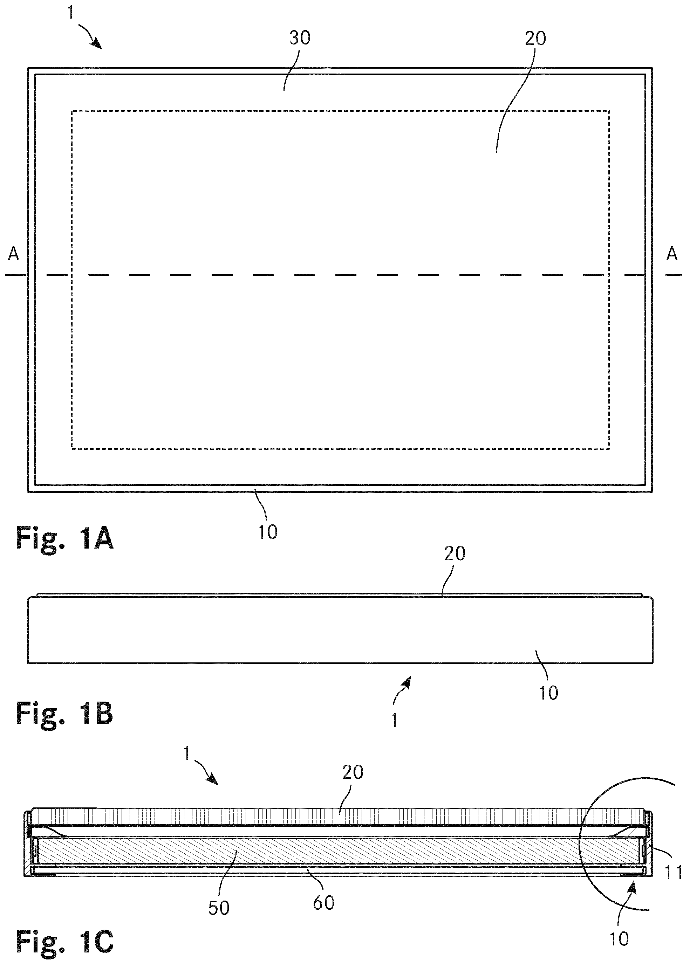

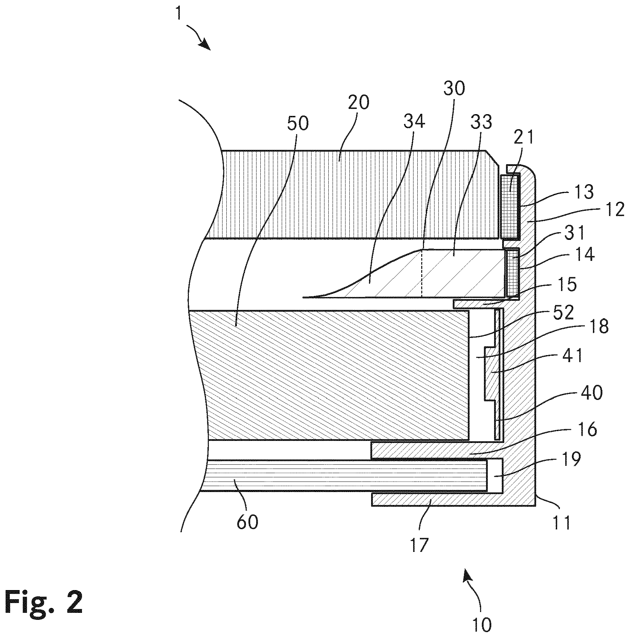

Im Zusammenhang mit den Figuren 1 und 2 wird ein Ausführungsbeispiel eines erfindungsgemässen Leuchtelements beschrieben. Die Figur 1A zeigt eine Draufsicht auf eine Ausführungsform des erfindungsgemässen Leuchtelements, die Figur 1B eine Seitenansicht, die Figur 1C einen Querschnitt durch das Leuchtelement in der Ebene A-A und die Figur 2 eine Detailansicht des Randbereichs im Querschnitt der Figur 1C.

Das Leuchtelement 1 umfasst einen rechteckigen Rahmen 10, in welchem frontseitig eine Glasplatte 20 mit einer Dicke von 6 mm aufgenommen ist. Die Glasplatte 20 weist auf ihrer Frontseite eine abgefaste Kante auf. Der Rahmen 10 ist durch Profile 11 aus stranggepresstem Aluminium mit konstanter Querschnittsgeometrie gebildet. Jedes Profil 11 umfasst einen Mantelteil 12, welcher den Aussenmantel des Rahmens 10 bildet und dessen Hauptrichtung sich senkrecht zu den Hauptflächen der Glasplatte 20 erstreckt. Die Aussenfläche des Mantelteils 12 ist weitgehend eben, frontseitig ist sie abgerundet, um angrenzend an die Glasplatte 20 eine abgerundete Kante zu bilden. Auf der Innenseite sind am Mantelteil von der Front- zur Rückseite zwei Nuten 13, 14 und anschliessend drei Vorsprünge 15, 16, 17 ausgebildet. Zwischen dem vordersten Vorsprung 15 und dem mittleren Vorsprung 16 bzw. dem mittleren Vorsprung 16 und dem hinteren Vorsprung 17 wird so jeweils eine nutartige Aufnahme 18, 19 gebildet. Das Profil besitzt eine Länge (entlang des Mantelteils 12) von 21 mm, der Mantelteil 12 weist eine Dicke von 2 mm auf. Die beiden Nuten 13, 14 haben eine Tiefe von ca. 1mm und eine Breite von 4.1 mm (Nut 13) bzw. 3.2 mm (Nut 14). Der vorderste Vorsprung 15 ragt 3 mm über den Mantelteil 12 hinein, die beiden hinteren Vorsprünge 16, 17 um 8 mm. Die Breite der Zwischenräume zwischen den Vorsprüngen beträgt 8.2 mm (vorne) bzw. 2.1 mm (hinten).

Die Glasplatte 20 ist über ein Klebeband 21 in der vordersten Nut 13 befestigt. Sie ist weitgehend passend innerhalb des Rahmens 10 gehalten, die von aussen sichtbare Rahmenbreite beträgt nur 2 mm, davon werden 1.8 mm von der vorderen Stirnfläche des Profils 11 eingenommen. Die Glasplatte 20 steht vorne ca. 1 mm über die Stirnfläche des Profils 11 über. Über ein weiteres Klebeband 31 ist ein Diffusorstreifen 30 in der nächsthinteren Nut 14 befestigt. In die darauffolgende Aufnahme 18 zwischen den Vorsprüngen 15, 16 ist angrenzend an das Profil 11 eine LED-Leiste 40 eingeklebt. Diese umfasst eine Reihe von gleichmässig auf einem Träger angeordneten LED-Lichtquellen, deren Stromversorgung und Kühlung sowie gegebenenfalls optische Elemente (Linsen, Reflektoren) zum Erzielen der gewünschten Lichtverteilung. Ferner ist in dieser Aufnahme 18 radial innerhalb der LED-Leiste 40 eine Lichtleiterplatte 50 aus Acrylglas (PMMA) mit einer Dicke von 8 mm aufgenommen. Die Lichtleiterplatte 50 umfasst lichtstreuende farblose Partikel, welche dazu führen, dass Licht primär über die Hauptflächen der Lichtleiterplatte 50 ausgekoppelt wird.

Die Aussenkante 52 der Lichtleiterplatte 50 erstreckt sich parallel zur Hauptrichtung des Mantelteils 12 des Profils 11 und ist von den LED-Lichtquellen 41 der LED-Leiste 40 beabstandet. Der Abstand zur LED-Leiste 40 ist mit ca. 1 mm klein gewählt, um eine möglichst vollständige Einkopplung des abgestrahlten Lichts in die Lichtleiterplatte 50 zu erreichen. Als Lichtleiterplatte geeignet ist beispielsweise das Produkt PLEXIGLAS® EndLighten, das von der Firma Evonik Industries AG, Darmstadt, Deutschland, angeboten wird. Damit sind bei zweiseitiger Beleuchtung Leuchtstrecken von 300 - 600 mm (Produkt L) bzw. von 600 - 1300 mm (Produkt XL) realisierbar. Die Ausbreitungsrichtung der in eine derartige Platte über eine Seitenfläche eingekoppelten Lichtstrahlen wird durch Lichtbrechung und Lichtbeugung derart geändert, dass die Totalreflexion an der Oberfläche reduziert wird und ein Lichtaustritt unter kleinen Winkeln zur Plattenoberfläche erfolgt. Durch diesen Effekt wird eine gleichmäßig leuchtende Oberfläche erzeugt.

Zwischen der vorderen Hauptfläche der Lichtleiterplatte 50 und der hinteren Hauptfläche der Glasplatte ergibt sich ein Abstand von 4.2 mm.

In der hintersten Aufnahme 19 zwischen den Vorsprüngen 16, 17 ist eine Reflektorplatte 60 aus Aluminium mit einer Dicke von 2 mm aufgenommen. Sie bildet auch den Rücken des Leuchtelements 1. Die Aluminiumplatte reflektiert nach hinten aus der Lichtleiterplatte 50 ausgekoppeltes Licht in die Lichtleiterplatte 50 zurück. Die Aluminiumplatte kann - zumindest auf der Innenseite - weiss pulverbeschichtet sein, um den Reflexionsgrad zu erhöhen.

Die vier Seiten des Leuchtelements 1 sind im Wesentlichen identisch ausgebildet, d. h. alle vier Seiten des gezeigten Ausführungsbeispiels sind mit einer LED-Leiste ausgerüstet. Entsprechend erstreckt sich der Diffusorstreifen 30 entlang aller vier Seiten des Leuchtelements 1, wie in der Figur 1A durch die gestrichelte Linie angedeutet. Der Diffusorstreifen 30 ist aus einem weiss durchscheinenden PMMA-Material gefertigt, welches eine hohe Lichtstreuung bei hoher Transmission aufweist. Dadurch werden einerseits Hot Spots aufgrund der LED-Lichtquellen unterdrückt, andererseits ergibt sich eine Lichtverteilung über die gesamte Fläche des Diffusorstreifens 30.

Der Diffusorstreifen 30 umfasst einen an das Profil 11 angrenzenden, im Querschnitt rechteckigen Hauptteil 33 mit im Wesentlichen konstanter Dicke sowie einen innen an den Hauptteil 33 anschliessenden Innenteil 34, in welchem sich die Dicke kontinuierlich verringert und welcher im Bereich des inneren Endes in eine scharfe Kante ausläuft. Die Verringerung der Dicke verläuft dabei so, dass die hintere Aussenfläche des Diffusorstreifens 30 eben ist und parallel zu den Hauptflächen der Glasplatte 20 und der Lichtleiterplatte 50 verläuft. Die vordere Aussenfläche des Diffusorstreifens 30 bewegt sich ausgehend vom Übergang zwischen dem Hauptteil 33 und dem Innenteil 34 nach innen von der Glasplatte 20 weg, d. h. der Abstand zur Glasplatte 20 wächst in radialer Richtung nach innen. Der Verlauf ist dabei derart, dass zunächst ein konvexer und anschliessend ein konkaver Abschnitt gebildet werden.

Die Dicke des Diffusorstreifens 30 (also die Ausdehnung in eine Richtung senkrecht zu den Hauptflächen der Glasplatte 20 und der Lichtleiterplatte 50) beträgt 3.0 mm. Die Gesamtbreite des Diffusorstreifens 30 (also die Ausdehnung in radialer Richtung) beträgt 12.5 mm, davon diejenige des Hauptteils 4.0 mm. Die Radien im konvexen als auch konkaven Bereich des Innenteils betragen je 6 mm.

Als Material für den Diffusorstreifen geeignet ist beispielsweise das Produkt PLEXIGLAS® LED WH14, das von der Firma Evonik Industries AG, Darmstadt, Deutschland, angeboten wird.

Durch die Geometrie des Diffusorstreifens 30 und seine Anordnung im Leuchtelement 1 ergibt sich eine weitgehend von Schatten und Lichtern freie Lichtverteilung über die gesamte Fläche der Glasplatte 20. Die LED-Lichtquellen 41 der LED-Leiste 40 sind aufgrund des davor angeordneten Vorsprungs 15 nicht unmittelbar sichtbar. Durch die Lichtleiterplatte 50 und den Diffusionsstreifen 30 ergibt sich aber eine Lichtverteilung, welche die gesamte Fläche der Glasplatte 20 erfasst. Durch die scharf zulaufende innere Kante des Diffusorstreifens 30 werden Schattenbildungen zuverlässig vermieden.

Das Leuchtelement 1 kann als Beleuchtungsmittel verwendet werden. Insbesondere dient die Glasplatte 20 oder ein vorgeordnetes Element aber als Motivträger. Beispielsweise ist die Glasplatte auf ihrer Rückseite oder auf einer Zwischenschicht bedruckt.

Die Erfindung ist nicht auf das dargestellte Ausführungsbeispiel beschränkt. Beispielsweise lassen sich die Formen und Dimensionen der verwendeten Elemente vielfältig variieren. Je nach flächiger Ausdehnung des Leuchtelements kann es ausreichend sein, wenn die Lichtleiterplatte nur auf zwei gegenüberliegenden Seiten (oder gar nur auf einer einzigen Seite) beleuchtet wird. Die Kantenflächen der nicht beleuchteten Seiten der Lichtleiterplatte werden in diesem Fall bevorzugt mit einem reflektierenden Klebeband (mit hochglänzender Klebeseite) abgedeckt. So wird ein Lichtverlust über die Seitenkanten vermieden.

Analog lassen sich auch andere Materialien für den Rahmen, die optischen Platten, den Diffusor und weitere Elemente einsetzen.

Zusammenfassend ist festzustellen, dass die Erfindung ein Leuchtelement schafft, welches höchstens einen schmalen Rahmen aufweist und dessen Lichtverteilung an der frontseitigen lichtdurchlässigen Platte möglichst gleichmässig ist.

## Patentansprüche

1. Leuchtelement (1) mit einem Gehäuse, das einen Rahmen (10) umfasst, und einer lichtdurchlässigen Platte (20), welche frontseitig am Rahmen (10) angeordnet ist, weiter umfassend:
a) mindestens ein LED-Leuchtband (40), welches entlang mindestens einer Innenseite des Rahmens (10) angeordnet ist;
b) eine Lichtleiterplatte (50), welche hinter der lichtdurchlässigen Platte (20) und parallel zu dieser im Gehäuse angeordnet ist, wobei über mindestens eine Seitenfläche (52) der Lichtleiterplatte (50) Licht des mindestens einen LED-Leuchtbands (40) in die Lichtleiterplatte (50) eingekoppelt wird und wobei Licht über eine Hauptfläche der Lichtleiterplatte (50) in Richtung der lichtdurchlässigen Platte (20) ausgekoppelt wird; und
c) mindestens einen flächigen Diffusor (30), welcher zwischen der Lichtleiterplatte (50) und der lichtdurchlässigen Platte (20) angeordnet ist und eine Lichtverteilung im Bereich der lichtdurchlässigen Platte (20) vergleichmässigt;
d) wobei sich eine flächige Erstreckung des mindestens einen flächigen Diffusors (30) auf einen Randbereich der lichtdurchlässigen Platte (20) beschränkt; und
e) der mindestens eine flächige Diffusor (30) einen ersten Abschnitt (34) mit einer radial von aussen nach innen abnehmenden Dicke aufweist;
**dadurch gekennzeichnet, dass**
f) der erste Abschnitt (34) des mindestens einen flächigen Diffusors (30) in eine scharfe Kante ausläuft.

2. Leuchtelement (1) nach Anspruch 1, **dadurch gekennzeichnet, dass** der erste Abschnitt (34) des mindestens einen flächigen Diffusors (30) auf mindestens einer Hauptfläche im Querschnitt konkav ausgebildet ist.

3. Leuchtelement (1) nach Anspruch 2, **dadurch gekennzeichnet, dass** der mindestens eine flächige Diffusor (30) eine erste ebene Hauptfläche und gegenüberliegend eine zweite, gebogene Hauptfläche aufweist.

4. Leuchtelement (1) nach Anspruch 3, **dadurch gekennzeichnet, dass** die ebene Hauptfläche der Lichtleiterplatte (50) zugewandt ist.

5. Leuchtelement (1) nach einem der Ansprüche 1 bis 4, **dadurch gekennzeichnet, dass** der mindestens eine flächige Diffusor (30) radial aussen an den ersten Abschnitt (34) anschliessend einen zweiten Abschnitt (33) mit konstantem Querschnitt aufweist.

6. Leuchtelement (1) nach Anspruch 5, **dadurch gekennzeichnet, dass** sich der zweite Abschnitt (33) radial bis in den Bereich des mindestens einen LED-Leuchtbands (40) erstreckt.

7. Leuchtelement (1) nach einem der Ansprüche 1 bis 6, **dadurch gekennzeichnet, dass** mindestens zwei LED-Leuchtbänder (40) an einander gegenüberliegenden Seiten angeordnet sind und dass Licht der mindestens zwei LED-Leuchtbänder (40) über mindestens zwei einander gegenüberliegende Seitenflächen der Lichtleiterplatte (50) in diese eingekoppelt wird.

8. Leuchtelement (1) nach einem der Ansprüche 1 bis 7, **dadurch gekennzeichnet, dass** sich die flächige Erstreckung des mindestens einen flächigen Diffusors (30) auf diejenigen Randbereiche der lichtdurchlässigen Platte (20) beschränkt, über deren Seitenflächen Licht in die Lichtleiterplatte (50) eingekoppelt wird.

9. Leuchtelement (1) nach einem der Ansprüche 1 bis 8, **dadurch gekennzeichnet, dass** die lichtdurchlässige Platte (20) vom Rahmen (10) umschlossen ist.

10. Leuchtelement (1) nach einem der Ansprüche 1 bis 9, **dadurch gekennzeichnet, dass** der Rahmen (10) durch ein Profil mit Aufnahmenuten für das mindestens eine LED-Leuchtband (40), die Lichtleiterplatte (50), den mindestens einen flächigen Diffusor (30) und die lichtdurchlässige Platte (20) gebildet ist.

11. Leuchtelement (1) nach einem der Ansprüche 1 bis 10, **dadurch gekennzeichnet, dass** sich der Rahmen (10) frontseitig nicht über die lichtdurchlässige Platte (20) radial nach innen erstreckt.

12. Leuchtelement (1) nach einem der Ansprüche 1 bis 11, **dadurch gekennzeichnet, dass** ein radialer Abstand zwischen allen Aussenkanten der lichtdurchlässigen Platte (20) und einem entsprechenden Aussenmantel des Rahmens (10) maximal 5 mm beträgt.

13. Leuchtelement (1) nach einem der Ansprüche 1 bis 12, **dadurch gekennzeichnet, dass** die lichtdurchlässige Platte (20) eine Glasplatte umfasst.

14. Leuchtelement (1) nach einem der Ansprüche 1 bis 13, **gekennzeichnet durch** eine reflektierende Platte (60), welche hinter der Lichtleiterplatte (20) angeordnet ist.

## Claims

1. Lighting element (1) having a housing, which comprises a frame (10), and a translucenttranslucent plate (20), which is arranged on the front side of the frame (10), further comprising:
a) at least one LED lighting strip (40) which is arranged along at least one inner side of the frame (10) ;
b) a light guide plate (50) which is arranged in the housing behind the translucent plate (20) and parallel to the said translucent plate, wherein light from the at least one LED lighting strip (40) is coupled into the light guide plate (50) by means of at least one side face (52) of the light guide plate (50), and wherein light is coupled out in the direction of the translucent plate (20) by means of a main face of the light guide plate (50); and
c) at least one flat diffusor (30) which is arranged between the light guide plate (50) and the translucent plate (20) and equalizes a light distribution in the region of the translucent plate (20) ;
d) wherein a flat extent of the at least one flat diffusor (30) is restricted to a boundary region of the translucent plate (20); and
e) the at least one flat diffusor (30) has a first section (34) with a thickness which decreases radially from the outside to the inside;
**characterized in that**
f) the first section (34) of the at least one flat diffusor (30) ends in a sharp edge.

2. Lighting element (1) according to Claim 1, **characterized in that** the first section (34) of the at least one flat diffusor (30) is of concave design in cross section on at least one main face.

3. Lighting element (1) according to Claim 2, **characterized in that** the at least one flat diffusor (30) has a first planar main face and, opposite thereto, a second, bent main face.

4. Lighting element (1) according to Claim 3, **characterized in that** the planar main face faces the light guide plate (50).

5. Lighting element (1) according to one of Claims 1 to 4, **characterized in that** the at least one flat diffusor (30) has a second section (33) of constant cross section adjoining the first section (34) radially on the outside.

6. Lighting element (1) according to Claim 5, **characterized in that** the second section (33) extends radially into the region of the at least one LED lighting strip (40).

7. Lighting element (1) according to one of Claims 1 to 6, **characterized in that** at least two LED lighting strips (40) are arranged on mutually opposite sides, and **in that** light from the at least two LED lighting strips (40) is coupled by means of at least two mutually opposite side faces of the light guide plate (50) into the said light guide plate.

8. Lighting element (1) according to one of Claims 1 to 7, **characterized in that** the flat extent of the at least one flat diffusor (30) is restricted to those boundary regions of the translucent plate (20) by means of the side faces of which light is coupled into the light guide plate (50).

9. Lighting element (1) according to one of Claims 1 to 8, **characterized in that** the translucent plate (20) is enclosed by the frame (10).

10. Lighting element (1) according to one of Claims 1 to 9, **characterized in that** the frame (10) is formed by a profile with receiving grooves for the at least one LED lighting strip (40), the light guide plate (50), the at least one flat diffusor (30) and the translucent plate (20) .

11. Lighting element (1) according to one of Claims 1 to 10, **characterized in that** the frame (10), at the front, does not extend radially inwards over the translucent plate (20).

12. Lighting element (1) according to one of Claims 1 to 11, **characterized in that** a radial distance between all outer edges of the translucent plate (20) and a corresponding outer casing of the frame (10) is at most 5 mm.

13. Lighting element (1) according to one of Claims 1 to 12, **characterized in that** the translucent plate (20) comprises a glass plate.

14. Lighting element (1) according to one of Claims 1 to 13, **characterized by** a reflective plate (60) which is arranged behind the light guide plate (20).

## Revendications

1. Élément d'éclairage (1) comportant un boîtier comprenant un châssis (10) et une plaque transparente à la lumière (20) disposée à l'avant du châssis (10), comprenant en outre :
a) au moins une bande lumineuse à DEL (40) qui est disposée le long d'au moins une face intérieure du châssis (10) ;
b) une plaque de guidage de lumière (50) qui est disposée derrière la plaque transparente à la lumière (20) et parallèlement à celle-ci dans le boîtier, dans lequel la lumière provenant de l'au moins une bande lumineuse à DEL (40) est injectée dans la plaque de guidage de lumière (50) par l'intermédiaire d'au moins une surface latérale (52) de la plaque de guidage de lumière (50) et dans lequel de la lumière est extraite par l'intermédiaire d'une surface principale de la plaque de guidage de lumière (50) en direction de la plaque transparente à la lumière (20) ; et
c) au moins un diffuseur plan (30) qui est disposé entre la plaque de guidage de lumière (50) et la plaque transparente à la lumière (20) et qui uniformise une répartition de lumière dans la région de la plaque transparente à la lumière (20) ;
d) dans lequel une étendue plane de l'au moins un diffuseur plan (30) est limitée à une région de bord de la plaque transparente à lumière (20) ; et
e) l'au moins un diffuseur plan (30) comporte une première partie (34) présentant une épaisseur décroissant radialement de l'extérieur vers l'intérieur ;
**caractérisé en ce que**
f) la première partie (34) de l'au moins un diffuseur plan (30) se termine par un bord tranchant.

2. Élément d'éclairage (1) selon la revendication 1, **caractérisé en ce que** la première partie (34) de l'au moins un diffuseur plan (30) possède une section transversale concave sur au moins une surface principale.

3. Élément d'éclairage (1) selon la revendication 2, **caractérisé en ce que** l'au moins un diffuseur plan (30) présente une première surface principale plane et une seconde surface principale incurvée opposée à celle-ci.

4. Élément d'éclairage (1) selon la revendication 3, **caractérisé en ce que** la surface principale plane est tournée vers la plaque de guidage de lumière (50).

5. Élément d'éclairage (1) selon l'une des revendications 1 à 4, **caractérisé en ce que** l'au moins un diffuseur plan (30) présente une seconde partie (33) adjacente à la première partie (34), qui possède une section transversale constante radialement vers l'extérieur.

6. Élément d'éclairage (1) selon la revendication 5, **caractérisé en ce que** la seconde partie (33) s'étend radialement dans la région de l'au moins une bande lumineuse à DEL (40).

7. Élément d'éclairage (1) selon l'une des revendications 1 à 6, **caractérisé en ce qu'**au moins deux bandes lumineuses à DEL (40) sont disposées sur des faces mutuellement opposées et **en ce que** la lumière provenant des au moins deux bandes lumineuses à DEL (40) est injectée dans la plaque de guidage de lumière (50) par l'intermédiaire d'au moins deux faces latérales mutuellement opposées de la plaque de guidage de lumière (50) .

8. Élément d'éclairage (1) selon l'une des revendications 1 à 7, **caractérisé en ce que** l'étendue plane de l'au moins un diffuseur plan (30) est limitée aux régions de bord de la plaque transparente à la lumière (20), dont les surfaces latérales permettent d'injecter de la lumière dans la plaque de guidage de lumière (50).

9. Élément d'éclairage (1) selon l'une des revendications 1 à 8, **caractérisé en ce que** la plaque transparente à la lumière (20) est entourée par le châssis (10).

10. Élément d'éclairage (1) selon l'une des revendications 1 à 9, **caractérisé en ce que** le châssis (10) est formé par un profilé présentant des rainures de réception pour l'au moins une bande lumineuse à DEL (40), la plaque de guidage de lumière (50), l'au moins un diffuseur plan (30) et la plaque transparente à la lumière (20).

11. Élément d'éclairage (1) selon l'une des revendications 1 à 10, **caractérisé en ce que**, sur la face avant, le châssis (10) ne s'étend pas radialement vers l'intérieur sur la plaque transparente à la lumière (20).

12. Élément d'éclairage (1) selon l'une des revendications 1 à 11, **caractérisé en ce qu'**une distance radiale entre tous les bords extérieurs de la plaque transparente à la lumière (20) et une enveloppe extérieure correspondante du châssis (10) est au plus égale à 5 mm.

13. Élément lumineux (1) selon l'une des revendications 1 à 12, **caractérisé en ce que** la plaque transparente à la lumière (20) comprend une plaque de verre.

14. Élément d'éclairage (1) selon l'une des revendications 1 à 13, **caractérisé par** une plaque réfléchissante (60) disposée derrière la plaque de guidage de lumière (20).
